(19) **Europäisches Patentamt**
**European Patent Office**
**Office européen des brevets**

(11) Publication number: **0 033 225**
**A2**

(12) # EUROPEAN PATENT APPLICATION

(21) Application number: **81300285.4**

(22) Date of filing: **22.01.81**

(51) Int. Cl.³: **A 47 C 7/02**
**B 29 H 9/00, B 29 C 27/00**

(30) Priority: **23.01.80 GB 8002196**

(43) Date of publication of application:
**05.08.81 Bulletin 81/31**

(84) Designated Contracting States:
**AT BE CH DE FR GB IT LI LU NL SE**

(71) Applicant: **PIRELLI LIMITED**
**Thavies Inn House 3-4 Holborn Circus**
**London EC1N 2QA(GB)**

(72) Inventor: **Gilbert, Horace**
**13 Sandringham Avenue Stapenhill**
**Burton-on-Trent Staffordshire(GB)**

(72) Inventor: **Wain, Robert Edwin**
**33 Harwood Avenue Branston**
**Burton-on-Trent Staffordshire(GB)**

(74) Representative: **Hodding, Henry Squarey et al,**
**A.A. THORNTON & CO. Northumberland House 303-306**
**High Holborn**
**London, WC1V 7LE(GB)**

(54) **Resilient seating supports.**

(57) A resilient sheet for attaching across a seat frame to provide a resilient seating support comprises two lengths of flat metal strip (16) disposed in pockets along opposite edges of the sheet, the sheet being attached to the seat frame by hooks (14) engaging around the metal strips (16) through apertures (18) in the sheet. The sheet comprises strips (10) of elastic rubber or plastics material attached by vulcanisation to non-stretch material strips (10), the outer two of which are folded over to form the pockets for the metal strips. The resilient sheets are cut from a length of product formed by feeding the various strips (10,12,16) into a rotary curing machine to vulcanise the elastic strips and effect bonding of them to the non-stretch strips, the metal strips (16) flexing and passing satisfactorily through the rotary curing machine but exhibiting sufficient strength for attachment to the seat frame by the hooks (14).

*FIG. 1.*

Croydon Printing Company Ltd.

- 1 -

## RESILIENT SEATING SUPPORTS

This invention relates to a resilient sheet for attaching across a seat frame to provide a resilient seating support, whether in the seat proper or back of the seat. The invention is particularly concerned with the attaching of the resilient sheet to the seat frame, and with a method of manufacturing the resilient sheets which facilitates said attaching.

Our British patent 1 500 725 describes a resilient sheet for attaching across a seat frame to provide a resilient seating support, which resilient sheet comprises at least one piece of substantially non-stretch sheet material having a series of openings at least in a marginal edge thereof and at least one piece of elastic rubber sheet or elastic plastics sheet disposed so as a marginal edge thereof overlaps said marginal edge of the non-stretch material, the piece of non-stretch material and piece of elastic sheet being secured together by material of said elastic sheet extending through said openings. The material of the elastic sheet is caused to flow into and through the openings in the non-stretch sheet by vulcanisation of the rubber or plastics sheet to form a strong mechanical bond and the non-stretch sheet preferably comprises an open weave fabric. In particularly advantageous forms, the resilient sheet comprises a plurality of strips of the non-stretch material and elastic material alternating with each other across the width of the resilient sheet, so that the strips may be bonded together by a continuous process in a rotary curing machine to produce the resilient sheet in a long length which is subsequently cut into a plurality of seating supports of desired lengths. For the purposes of attaching the seating supports across a seat frame, the strips along the opposite edges of the resilient sheet comprise the non-stretch material, and each such strip is folded so that both its edges are bonded to the adjacent elastic strip, thus forming a pocket extending along the edge of the resilient sheet. Once the resilient sheet is cut to length, appropriate lengths of metal rod or wire are inserted into the two pockets of each seating support, and metal hooks are applied to pierce the non-stretch strips and engage the rods or wires. Opposite ends of the hooks are intended to engage the seat frame.

Hitherto, it has been necessary to insert a pair of wires individually into each seating support, after it has been cut to length from a roll which is collected at the output of the rotary curing machine. This is a labour-intensive operation which consequently forms a substantial part of the cost of manufacture.

In accordance with this invention, there is provided a method of manufacturing resilient sheets for attaching across seat frames to provide resilient support for the seat occupants, said method comprising continuously feeding to a rotary curing maching (40-45) first and second lengths (10) of non-stretch flexible sheet material and first and second lengths of flat metal strip (16) together with at least one length (12) of rubber or plastics sheet material (in uncured state) disposed between said first and second lengths of non-stretch sheet material, the lengths of non-stretch material being folded lengthwise about the respective flat metal strips upon feeding into the rotary curing machine and so that the opposite longitudinal edges of each length of non-stretch sheet material overlap a longitudinal edge of the or a respective said length of rubber or plastics sheet material, and in which method the curing machine effects vulcanisation of the rubber or plastics sheet material to render it elastic and the vulcanisation causes material of the rubber or plastics sheet to flow into and through openings in the lengths of non-stretch sheet material so as to secure together the overlapping edges of non-stretch and rubber or plastics sheets, the method further comprising cutting to selected lengths the product which issues from the rotary curing machine.

Thus, lengths of non-stretch and rubber or plastics material are fed into the rotary curing machine together with flat strips of metal so as to produce a continuously issuing length of sheet product having pockets formed of the non-stretch strips along its opposite edges, which pockets are complete with respective said metal strips. This product is then cut to desired lengths to form resilient sheets for attaching across seat frames to provide resilient seating supports. Because the metal strips are flat, they will flex and pass satisfactorily through the rotary curing machine, whilst they will still exhibit sufficient strength for their purpose of attachment to the seat frame. Preferably, cutting to length is achieved by an automatic apparatus which cuts perforations, e.g. slots, adjacent the metal strips in order to receive attachment hooks, the slots being cut at regular intervals and the apparatus counting the number of slots cut and responding to a predetermined count to effect a cut to length. Both the spacing between slots and the predetermined count may be selected on the apparatus.

The resilient sheets may include an inflatable element and be arranged for attaching across a seat frame to provide additional support for the user, especially across the back of a car seat to provide support for the lumbar region. The inflatable element may be formed by bonding a further piece of sheet material bonded face-to-face to the elastic sheet in the rotary curing machine, with a piece of paper or the like disposed between them over certain regions to prevent bonding in these regions and thus to form inflatable voids. Thus, the length of product is formed with inflatable voids repeating along it, and is then cut to length to form a plurality of such resilient sheets. Metal hooks are applied after cutting to length and these hooks serve to attach the inflatable element to the seat frame. A flexible tube is then soupled at one end to the inflatable void or voids of each resilient sheet and at its other end to a valve by which the user can inflate or deflate the element. An inflation device e.g. a bulb-type hand pump may be connected to the valve so that the user can adjust the pressure to give optimum comfort at will.

Embodiments of this invention will now be described, by way of examples only, with reference to the accompanying drawings, in which:

FIGURE 1 is a perspective view of a resilient sheet forming a seating support;

FIGURE 2 is a plan view of seating support with inflatable element;

FIGURE 3 is a schematic diagram in side view of a rotary curing machine for forming the products of Figures 1 and 2;

FIGURE 4 is a schematic diagram in a plan view of the in-feed portion of the machine of Figure 3, on an enlarged scale; and

FIGURE 5 is a perspective view of a seat frame provided with seating supports according to Figures 1 and 2.

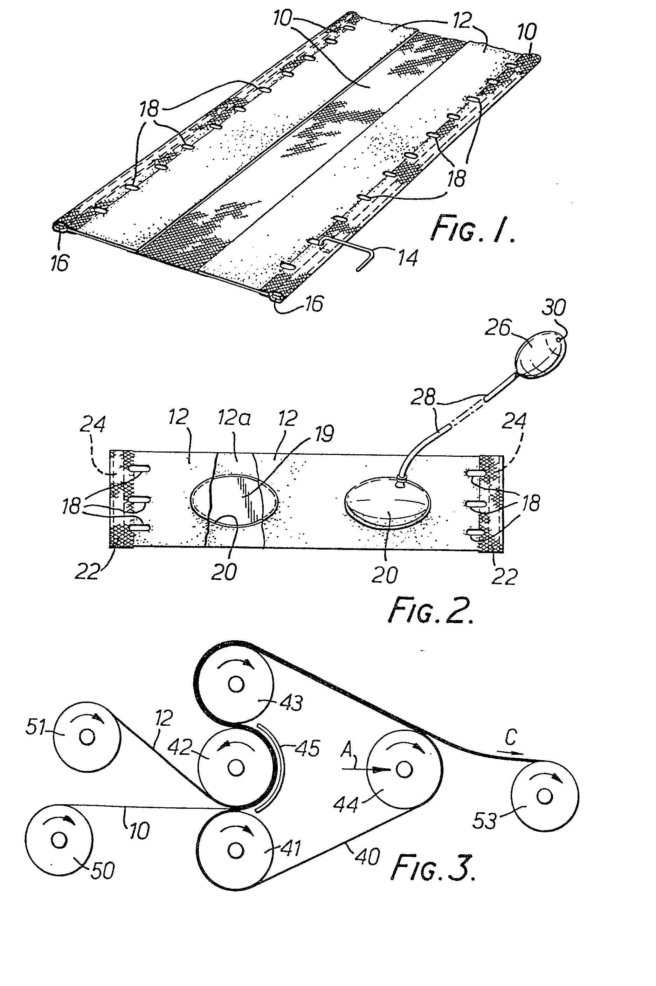

Referring to Figure 1, a resilient sheet for forming a seating support comprises strips 10 of substantially non-stretch sheet material alternating, across the width of the platform, with strips 12 of elastic rubber or plastics sheet material. Strips 10 of non-stretch material border the edges of the platform and are folded over so that both edges of each such strip 10 are secured to the adjacent elastic strip, thus forming pockets along the opposite edges of the platform. In accordance with the invention, flat metal strips 16 are disposed in the pockets, and oriented with their major surfaces parallel to the plane of the support, and hooks 14 (only one of which is shown) are applied to engage the metal strips with one end, the free ends of the hooks serving to attach the platform to opposite sides of a seat frame. In accordance with our British patent 1 500 725, the adjacent elastic and non-stretch strips are bonded together by a vulcanisation of the elastic strips causing material from these strips to flow into and through openings formed along the edges of the non-stretch strips: for this purpose the edges of the elastic and non-stretch strips overlap and preferably the non-stretch strips comprise an open weave material such that the elastic material flows between the warp and weft of this open weave material.

Figure 2 shows a resilient sheet for attaching across the back of the vehicle seat frame and having an inflatable element to provide support in the lumbar region of the person who will use the seat. Two pieces of elastic rubber or plastics sheet material 12,12a (shown with piece 12 partly cut-away to illustrate details) are bonded together face-to-face by vulcanisation with a piece of paper 19 interposed to prevent bonding over each region required to form an inflatable void 20. Strips of non-stretch material 22 are bonded along the opposite edges to form pockets complete with flat metal strips 24 for attachment purposes, and hooks (such as hooks 14 of Figure 1) are subsequently applied. A bulb hand pump 26 is coupled to the inflatable voids by a flexible tube 28 and the pump includes a release valve 30.

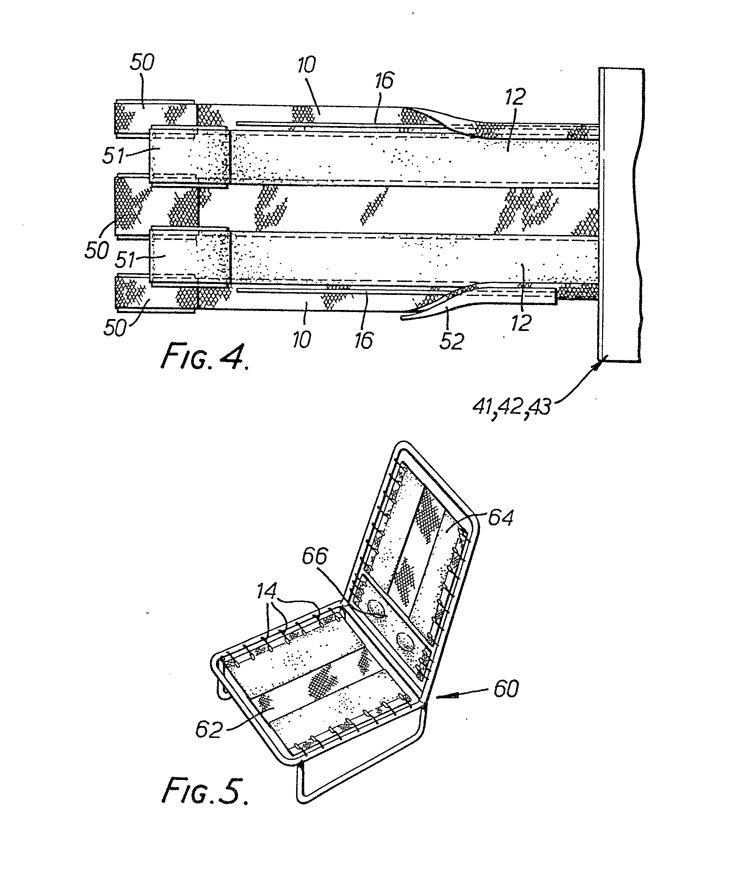

Both of the seating supports shown in Figures 1 and 2 are manufactured using a rotary curing machine, of which Figures 3 and 4 are schematic diagrams. A steel belt 40 is trained around drums 41,42,43 and 44 as shown. Means are provided to urge drum 44 away from the other drums, in the direction of arrow A, to impart tension to the belt. Drum 42 receives heat to heat it and an external heater 45 is also provided. Drive means are provided to drive the drums in the rotary directions indicated. Material to be bonded together (i.e. the elastic and non-stretch strips for Figure 1 and the two face-to-face lengths of elastic material and the non-stretch strips for Figure 2, in both cases with the flat metal strips) is fed in between rollers 41 and 42. This material is thus trapped between the belt 40 and the surface of drum 42 and, as it passed around this drum, curing or vulcanisation is effected. Then the product emerges from between drums 42 and 43 and passes to the output C over the top of the steel belt 40. At the infeed B, appropriate guides are arranged to correctly position the strips of material being fed into the machine, and also to correctly fold the non-stretch strips around the flat metal strips. In the example shown in Figures 3 and 4, the product according to Figure 1 is in course of manufacture and the lengths of non-stretch material 10 are fed from rolls 50 and the lengths of rubber or plastics material 12 are fed from rolls 51. The metal strips 16 are shown in Figure 3 together with one of the guides 52 for folding the lateral lengths of non-stretch material over the metal strips and so that the edges of each such length 10 overlap the adjacent edge of the respective rubber or elastic strip 12: the opposite edges of each such length 10 are folded so as to overlap onto the opposite major surfaces of the respective strip 12.

The flat metal strips 16 are less thick than the strips 12 being cured and flex and pass satisfactorily through the rotary curing machine, whilst they will still exhibit sufficient strength for their purposes of attachment to the seat frame.

The product issuing from the rotary curing machine is wound onto a roll 53 and subsequently cut into the lengths required on an automatic cutting apparatus. This operates to cut transverse slots 18 (Figures 1 and 2) adjacent the metal strips, which slots are cut at regular intervals. The apparatus counts the number of slots which it cuts and, at a predetermined count, operates to cut the product to length. The hooks 14 may then be engaged with the metal strips by insertion through appropriate ones of the slots. Instead of slots, other shapes may be envisaged. In certain circumstances a simple cut would be preferred so that the adjacent rubber would offer a friction grip to the subsequently-inserted hooks.

Although the inflatable element has been described as formed from two pieces of elastic rubber or plastics sheet material bonded face-to-face by vulcanisation, it is instead envisaged that a piece of elastic sheet be bonded to a piece of fabric-reinforced elastic sheet (e.g. rubberised fabric or rubbersied non-stretch material). The piece of elastic sheet faces forwards when the inflatable element is attached to the seat frame, and whatever the construction, it is the variability of the forward facing contour of the inflatable element which is of principal significance.

Figure 5 shows a tubular metal seat frame 60 for a vehicle, with a resilient sheet according to Figure 1 attached across opposite side members of the frame in the seat proper, by means of hooks 14 each having one end engaged around a metal strip 16 of the support and having its other end engaged in an aperture in the respective side member. A further resilient sheet 64 in accordance with Figure 1 is similarly attached across the seat frame for the back of the seat together with a resilient sheet 66 according to Figure 2.

The resilient sheet in accordance with Figure 2 may be made with one or any number of voids, positioned as required, and the resilient sheet itself may be arranged and so positioned on the seat frame as to provide support for some region, other than the lumbar region, of the occupant.

CLAIMS

1.      A method of manufacturing resilient sheets for attaching across seat frames to provide resilient support for the seat occupants, said method comprising continuously feeding to a rotary curing machine (40-45) first and second lengths (10) of non-stretch flexible sheet material and first and second lengths of flat metal strip (16) together with at least one length (12) of rubber or plastics sheet material (in uncured state) disposed between said first and second lengths of non-stretch sheet material, the lengths of non-stretch sheet material being folded lengthwise about the respective flat metal strips upon feeding into the rotary curing machine and so that the opposite longitudinal edges of each length of non-stretch sheet material overlap a longitudinal edge of the or a respective said length of rubber or plastics sheet material, and in which method the curing machine effects vulcanisation of the rubber or plastics sheet material to render it elastic and the vulcanisation causes material of the rubber or plastics sheet to flow into and through openings in the lengths of non-stretch sheet material so as to secure together the overlapping edges of non-stretch and rubber or plastics sheets, the method further comprising cutting to selected lengths the product which issues from the rotary curing machine.

2.      A method as claimed in claim 1, in which a further length of sheet material (12a) is continuously fed into the rotary curing machine superimposed over said length of rubber or plastics sheet material and is arranged to bond to said length of rubber or plastics sheet material during vulcanisation of the latter so as to form a succession of inflatable voids (20) between itself and the length of rubber or plastics sheet material.

3.      A method as claimed in claim 2,  comprising coupling an inflation  device (26) to the void
or voids of each said cut length of product which
issued continuously from the rotary curing machine.

4.      A method as claimed in any preceding claim,
comprising cutting a plurality of perforations (18),
in the product which issues from the rotary curing
machine, adjacent and spaced apart along each metal
strip.

5.      A resilient sheet for attaching across a seat
frame to provide a resilient seating support, said
resilient sheet being provided along two opposite edges
with pockets formed of strips of non-stretch flexible
sheet material (10) folded along their lengths, each
pocket receiving a length of flat metal strip (16)
and each strip of non-stretch sheet material having its
opposite longitudinal edges overlapping and secured to
an edge of a strip of elastic rubber or plastics sheet
material (12) by material of the elastic strip caused
to extend into and through openings in the non-stretch
strip by vulcanisation of the elastic strip.

6.      A resilient sheet as claimed in claim 5, in
which the non-stretch flexible material comprises an
open weave fabric and said openings comprise spaces
between warp and weft of the fabric of the respective
strips.

7.      A resilient sheet as claimed in claim 5 or 6,
in which a plurality of perforations (18) are formed
in the resilient sheet adjacent and spaced apart along
each metal strip, for receiving respective hooks (14) to engage the metal strips and to serve for attachment of the resilient sheet to opposite sides of a seat frame.

8.　　　A resilient sheet as claimed in any one of claims 5 to 7, comprising a said strip of elastic material having said folded strips of non-stretch material secured to opposite edges thereof.

9.　　　A resilient sheet as claimed in any one of claims 5 to 7, in which said folded strips of non-stretch material are secured to respective longitudinal edges of respective ones of two said strips of elastic material, the other longitudinal edges of the two said strips of elastic material being secured to respective longitudinal edges of a third strip of said elastic material.

10.　　　A resilient sheet as claimed in any one of claims 5 to 9, in which a further piece (12a) of sheet material is superimposed over the or a said strip of elastic material and bonded to that strip so as to form at least one inflatable void (20) between itself and that strip, a device (26) being coupled to the inflatable void or voids for inflation to a required level.

11.　　　A seat frame (60) provided with a resilient sheet, as claimed in any one of claims 5 to 10, attached across the seat frame to provide a resilient seating support (62,64) either for the seat proper or the back of the seat, the resilient sheet being attached to opposite side members of the seat frame by a plurality of hooks (14) engaging respective said metal strips and respective said side members.

12.     A seat frame as claimed in claim 11, provided
with a said resilient sheet (66) as claimed in claim
10 attached to opposite side members of the back of
the seat, for the inflatable voids to provide support
for the lumbar or other region of the occupant of the
seat.

FIG. 1.

FIG. 2.

FIG. 3.

FIG. 4.

41,42,43

FIG. 5.